# EUROPÄISCHE PATENTSCHRIFT

(11) **EP 3 251 829 B1**
(45) Veröffentlichungstag und Bekanntmachung des Hinweises auf die Patenterteilung: **29.07.2020**
(21) Anmeldenummer: 16171917.4
(22) Anmeldetag: 30.05.2016
(51) Int. Cl.: B32B 5/16, B44C 5/04, B41M 3/06, B41M 5/00, B41M 7/00, E04F 15/02

(54) **VERFAHREN ZUR HERSTELLUNG EINES FLÄCHIGEN DEKORELEMENTS SOWIE BAUELEMENT UND VERFAHREN ZUR HERSTELLUNG EINES BAUELEMENTES**
METHOD FOR MANUFACTURING A FLAT DECORATIVE ELEMENT AND CONSTRUCTION ELEMENT AND METHOD FOR MANUFACTURING SAME
PROCEDE DE FABRICATION D'UN ELEMENT DECORATIF PLAN ET COMPOSANT ET PROCEDE DE FABRICATION D'UN COMPOSANT

(43) Veröffentlichungstag der Anmeldung: 06.12.2017
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg

(56) Entgegenhaltungen:
- WO-A1-2015/174909
- WO-A2-2009/065769

## Beschreibung

Die Erfindung betrifft ein Verfahren zur Herstellung eines flächigen Dekorelements. Weiterhin betrifft die Erfindung ein Bauelement mit einem solchen Dekorelement sowie ein Verfahren zur Herstellung eines Bauelementes, insbesondere eines plattenförmigen Bauelementes, vorzugsweise eines Fußbodenpaneels.

Die sogenannte Holzpuder-Technologie oder Wood Powder Technologie zur Herstellung von Dekorschichten für Faserpaneele, insbesondere Laminatfußbodenpaneelen, zählt u.a. durch die WO 2009/065769 A2 zum Stand der Technik. Das dort offenbarte Herstellungsverfahren basiert in einer bevorzugten Ausführungsform auf einer Oberflächenschicht, die Holzfasern, Aluminiumoxid und ein wärmehärtbares Harz umfasst, wobei die Oberflächenschicht in einem Pressvorgang so geformt und mit einer Basisplatte aus hochverdichtetem Fasermaterial oder einer Spanplatte so verbunden wird, dass eine Bodenplatte entsteht. Hierzu wird Holz fein zu Holzfasern zerkleinert, woraufhin die Holzfasern mit einem wärmehärtbaren Kunststoff, Farbpigmenten und Aluminiumoxid-Teilchen gemischt werden. Dieses Gemisch wird dann auf die Basisplatte aufgebracht und unter hohem Druck sowie hoher Temperatur zu einer homogenen und massiven Oberflächenschicht auf der Basisplatte geformt und so eine Bodenplatte hergestellt.

Auch die WO 2015/174909 A1 offenbart ein Verfahren zur Herstellung eines flächigen Dekorelements, bei welchem auf eine Trägerlage eine Lage aus Pulver aufgebracht wird. Das Pulver wird auf der Trägerlage fixiert und anschließend ein Dekor auf die Pulverlage erzeugt. Auf die getrocknete Pulverlage wird vor dem Verpressen eine Decklage aufgebracht und die Trägerlage, die Pulverlage, das Dekor und die Decklage zum Dekorelement verpresst.

Bei dem aus der EP 2 212 071 B1 bekannten Verfahren steht die Wiederverwertung von Laminatfußböden im Vordergrund. Die Laminatfußbodenpaneele werden fein zerkleinert und die Partikel anschließend mit einem Melamin-Formaldehyd-Bindemittel gemischt. Aus diesem Gemisch wird dann ein schichtförmiges Material gepresst.

Die EP 2 523 804 B1 offenbart ein Verfahren zum Herstellen einer verschleißbeständigen Oberflächenschicht. Hierzu wird eine Trockenpulverschicht auf eine Trägerlage aufgetragen. Die Trockenpulverschicht besteht aus aufgeschlossenen Fasern, einem Bindemitteln, Pigmenten und verschleißbeständigen Partikeln. Die auf der Trägerlage aufgetragene Trockenpulverschicht wird anschließend ausgehärtet zu einer blass gefärbten verschleißbeständigen Schicht. Dies erfolgt unter Wärme- und Druckeinfluss auf die Mischung.

Schwierig ist eine dekorative Gestaltung einer solchen Oberfläche.

Durch die US 2014/0028772 A1 zählt ein Verfahren zur Herstellung eines digital gedruckten Bildes mit Farbpigmenten auf einer Oberfläche einer Bauplatte zum Stand der Technik. Hierzu werden trockene Farbpigmente auf die Oberfläche gestreut und anschließend ein Teil der trockenen Farbpigmente gebunden. Dies erfolgt durch den digitalen Auftrag einer flüssigen Substanz. Danach werden nicht gebundene trockene Farbpigmente entfernt, so dass auf der Oberfläche ein digitales Bild durch die gebundenen Farbpigmente gebildet wird.

Der Erfindung liegt ausgehend vom Stand der Technik die Aufgabe zugrunde, ein vorteilhaftes und rationelles Verfahren zur Herstellung eines flächigen Dekorelements zu schaffen sowie ein produkttechnisch vorteilhaftes Bauelement und ein Verfahren zur Herstellung eines solchen Bauelementes aufzuzeigen.

Die Lösung des die Herstellung eines flächigen Dekorelements betreffenden Teils der Aufgabe zeigt Anspruch 1 auf.

Zur Herstellung eines flächigen Dekorelements wird eine Trägerlage bereitgestellt und auf diese Trägerlage eine Lage aus Pulver aufgebracht. Das Pulver bzw. die Pulverlage wird dann auf der Trägerlage fixiert. Dies erfolgt vorzugsweise durch ein Befeuchten des Pulvers und anschließender Wärmeeinwirkung. Hierdurch erfolgt eine Vorhärtung, bei der das Pulver der Pulverlage angeliert wird. Hierbei kommt es zu einem Vernetzen der Pulverbestandteile an der Oberfläche der Pulverlage. Durch das Angelieren erfolgt ein Vorhärten und Antrocknen der Pulverlage, so dass das Pulver nicht mehr fließfähig ist, aber auch noch nicht vollständig ausgehärtet ist. Auf diese fixierte Pulverlage wird ein Dekor erzeugt. Das Dekor auf der Pulverlage wird durch einen drucktechnischen Auftrag einer Flüssigkeit auf die Pulverlage erzeugt. Bei der Flüssigkeit handelt es sich vorzugsweise um farbige Tinte. Bei der Flüssigkeit bzw. der Tinte kann es sich um Vollfarbe handeln. Ebenso sind die Grundfarben oder Gemische hiervon möglich. Auch Flüssigkeiten bzw. Tinten basierend auf dem CMYK-Farbmodel können drucktechnisch als Dekor auf die fixierte Pulverlage aufgebracht werden. Hierbei handelt es sich um einen Vierfarbdruck bzw. Mehrfarbdruck. Die Abkürzung CMYK steht für die drei Farbbestandteile Cyan, Magenta, Yellow sowie den Schwarzanteil Key als Farbtiefe. Das Dekor wird auf die fixierte Pulverlage gedruckt und getrocknet. Die Trägerlage, die Pulverlage und das Dekor werden dann zum Dekorelement verpresst. Dies erfolgt vorzugsweise in einer Kurztaktpresse.

Die Erfindung schafft ein vorteilhaftes und rationelles Verfahren zur Herstellung eines flächigen Dekorelements. Das Dekorelement besitzt einen vollständig durchgefärbten homogenen Schichtaufbau. Je nach Einstellung ist das Dekorelement hoch abriebfest. Das flächige Dekorelement besitzt vorzugsweise eine Stärke zwischen 0,3 mm und 3,0 mm. Das Dekorelement ist biegbar und kann in einfacher Weise bearbeitet werden, beispielsweise mittels Schneid- oder Sägeeinrichtungen.

Vorteilhafte Ausgestaltungen und Weiterbildungen des erfindungsgemäßen Verfahrens zur Herstellung eines flächigen Dekorelements sind Gegenstand der abhängigen Ansprüche 2 bis 8.

Der Pulverauftrag auf die Trägerlage erfolgt vorzugsweise durch Aufstreuen oder Gießen. Hierbei wird eine Pulverlage bzw. mehrere Pulverlagen in einer Schichtdicke zwischen 0,75 mm und 2,5 mm, insbesondere 1,0 mm bis 2,0 mm aufgebracht. Vorzugsweise liegt das Flächengewicht der Pulverlage zwischen 30 g/m2 und 650 g/m2.

Die Trägerlage kann mehrmals mit Pulver versehen werden. Hierdurch ist eine besondere Dekorgebung möglich. Auf die Trägerlage werden mehrere Pulver, insbesondere farblich und/oder stofflich und/oder in der Partikelgröße voneinander verschiedene Pulver, aufgetragen werden.

Das auf der Trägerlage aufgebrachte Pulver bildet eine homogene Lage. Diese Pulverlage wird anschließend fixiert. Das bedeutet die Trägerlage wird so behandelt, dass hierauf ein Dekor gedruckt werden kann.

Wie bereits erwähnt erfolgt beim Fixieren der Pulverlage ein Angelieren des Pulvers, so dass die Pulverlage vorhärtet und antrocknet. Das Pulver ist dann nicht mehr fließfähig, die Pulverlage jedoch noch nicht ausgehärtet.

Das Fixieren des Pulvers auf der Trägerlage erfolgt durch einen Flüssigkeitsauftrag und eine anschließende Wärmeeinwirkung. Der Flüssigkeitsauftrag kann durch ein Befeuchten, beispielsweise mittels eines Wassernebels erfolgen. Hierbei wird die Pulverlage mit einem Wassernebel bedampft. Nach einer Einwirkzeit von 1 Sekunden bis 60 Sekunden wird die Pulverlage dann angeliert. Dieses Vorhärten und Antrocknen erfolgt durch Wärmeeinwirkung. Als Wärme- bzw. Strahlungsquellen dienen Warmlufterzeuger, IR-Strahlung oder auch UV-Strahlung. Durch die Regelung der Wärme-/Strahlungsintensität und/oder der Werkstückbewegung bzw. Vorschutzgeschwindigkeit erreicht man die Angelierung der Oberfläche der Pulverlage ohne dass diese vollständig durchhärtet. Insbesondere erfolgt die Trocknung und das Angelieren der Pulverlage unter Einsatz von Infrarot-Strahlung (IR-Strahlung).

Beim Fixieren der Pulverlage folgt insbesondere eine Hautbildung auf der Oberfläche der Puderlage, welche bedruckt werden kann. Nach dem Fixieren ist die Oberfläche der Pulverlage bedruckbar.

Nach dem Fixieren der Pulverlage auf der Trägerlage können diese Zwischenprodukte bzw. Halbfertigprodukte auch abgestapelt sowie zwischengelagert und für die weitere Verwendung bevorratet werden.

Das Dekor auf der fixierten Pulverlage wird durch einen ein- oder mehrmaligen Auftrag von Tinte erzeugt werden. Anschließend wird die Tinte getrocknet, bei UV-Tinten erfolgt die Trocknung vorzugsweise mittels UV-Strahlung.

Die Auftragsmengen an Tinte liegen zwischen 2 g/m2 und 20 g/m2, je nachdem wie viel Flächenbereiche benetzt werden sollen. Als Tinte kommen farbige Flüssigkeiten zum Einsatz. Diese kann mittels einer Digitaldruckmaschine appliziert werden. Vorteilhaft ist es, wenn die Tinte eine möglichst hohe Oberflächenspannung aufweist. In Folge dessen zieht die Flüssigkeit nicht sofort in die Trägerlage ein, sondern bleibt auf der Oberfläche stehen. Bevorzugt kommt eine UV-härtende Tinte zum Einsatz, die eine Verbindung mit den Harzen, insbesondere Melaminharzen aus der Pulverlage bei Hitze und Druck eingeht. Dies erfolgt durch entsprechende Additive Harzzugaben in der Tinte.

Das erfindungsgemäße Verfahren sieht vor, dass auf die getrocknete Pulverlage vor dem Verpressen eine Decklage aufgebracht wird und die Trägerlage, die Pulverlage einschließlich des aufgedruckten Dekors und die Decklage gemeinsam verpresst werden, so dass das flächige Dekorelement entsteht. Auch Die Decklage wird in Pulverform aufgebracht. Die Decklage weist insbesondere verschleißbeständige Partikel, wie Korund auf. Ferner sind in der Decklage bzw. in dem die Decklage bildende Pulvermischung Bindemittel in Form von Pulverharzen, Melaminpulver und Zellulosepulver enthalten. Durch die Decklage erhält ein hergestelltes flächiges Dekorelement eine besonders hohe Abriebfestigkeit. Vorzugsweise ist die Decklage nach der Verpressung transparent.

Ein Aspekt der Erfindung sieht vor, dass die Trägerlage beidseitig mit einer Pulverlage versehen wird. Hierbei kann zunächst eine erste Seite der Trägerlage mit der Pulverlage versehen werden. Diese Pulverlage wird dann wie zuvor erläutert fixiert. Anschließend wird das Zwischenprodukt gewendet und die zweite Lage mit einer Pulverlage versehen und diese fixiert.

Der Gesamtprozess vom Streuen der Trägerlage bis zum Verpressen und damit der finalen Aushärtung der in den Lagen enthaltenen Bindemittel kann vollständig in einer Linie geschehen. Möglich ist es aber auch die Fertigung in mehreren Teilschritten mit Zwischenlagerung vorzunehmen. Dies ist insbesondere möglich, weil die Zwischenprodukte mit der fixierten Pulverlage mehrere Tage lagestabil sind.

Eine vorteilhafte Vorgehensweise sieht dabei folgenden Ablauf vor:
1. Aufbringen einer Pulverlage auf die Rückseite einer Trägerlage und anschließendes Fixieren der Pulverlage.
2. Wenden der einseitig mit einer Pulverlage versehenen Trägerlage und Aufbringen der Pulverlage auf die Oberseite der Trägerlage sowie anschließendes Fixieren der Pulverlage.
3. Bedrucken der Oberseite der fixierten Pulverlage mittels eines digitalen Druckverfahrens.
4. Aufbringung der vorzugsweise transparenten Decklage.
5. Verpressen der beidseitig mit einer Pulverlage versehenen Trägerlage und des Dekors zum Dekorelement.

Es entsteht ein dekoratives flächiges Dekorelement, welches vorzugsweise dünner als 3 mm ist. Das Dekorelement weist einen durchgefärbten homogenen Schichtaufbau auf. Für die Praxis wird eine Dicke des Dekorelements von 0,3 mm bis 3 mm als vorteilhaft angesehen. Die Oberfläche des Dekorelements besitzt eine deutlich sichtbare und fühlbare Struktur, im Bereich von 80 µm bis 500 µm. Das Dekorelement ist biegsam und kann leicht bearbeitet werden, beispielsweise mittels Schneiden oder Sägen. Ökologisch ist das Dekorelement wertvoll, da es einen Holzanteil von insbesondere mehr als 40% bzw. einen Anteil von nachwachsenden Rohrstoffen größer gleich 40% in dieser Größenordnung aufweist.

In der Praxis ist der Einsatz von Trägerlagen auf Papierbasis vorteilhaft. Die Trägerlagen sind rechteckig konfiguriert und können Abmessungen, beispielsweise mit einer Breite von 2,10 m bei einer Länge von 2,60 m bis 5,20 m haben. Selbstverständlich können auch andersartig dimensionierte Trägerlagen zum Einsatz gelangen. Möglich sind auch quadratische Trägerlagen mit Abmessungen von 2,10 m x 2,10 m. Denkbar sind auch bahnenförmige Trägerlagen oder bandförmige Trägerlagen. Solche bahnenförmige oder bandförmige Trägerlagen können als Rollware bereitgestellt werden.

Als Trägerlage kommen eine Lage auf Papierbasis oder Vliesbasis zur Anwendung, beispielsweise ein Overlaypapier oder beharztes Overlaypapier. Für die Praxis wird eine Trägerlage vorteilhaft angesehen, bei der es sich um ein Trägerpapier handelt. Das Trägerpapier besteht aus einer Zellulose. Das Trägerpapier kann auch so ausgelegt sein, dass es beim bzw. nach dem Verpressen transparent wird und die Farbe des Pulvers der Pulverlage annimmt. Weiterhin kann auch Kraftpapier als Trägerlage verwendet werden.

Erfindungsgemäß wird eine Trägerlage mit einem Flächengewicht zwischen einschließlich 10g/m2 und einschließlich 350 g/m2, bevorzugt zwischen einschließlich 130 g/m2 bis einschließlich 300 g/m2 verwendet.

Eine vorteilhafte Trägerlage besteht aus Papier mit einem Flächengewicht zwischen 60 g/m2 und 140 g/m2 und weist eine Dicke von ca. 0,10 mm auf.

Dieser Trägerlage aus Papier ist mit einer Harzimprägnierung versehen. Diese Harzimprägnierung selbst besitzt ein Flächengewicht zwischen 50 g/m2 und 150 g/m2. Die Trägerlage aus harzimprägniertem Papier weist dann ein Flächengewicht zwischen 110 g/m2 und 290 g/m2 auf.

Im Rahmen der Erfindung werden auch staub- und/oder puderförmige Partikel als Pulver bezeichnet. Vorzugsweise kommt ein Pulver zur Verwendung, welches Biomaterialpartikel enthält. Unter Biomaterialpartikel werden natürliche nachwachsende Rohrstoffe verstanden. Insbesondere weist das Pulver Holzpartikel auf. Weiterhin kann das Pulver mineralische Bestandteile vorzugsweise Gesteinsmehl und/oder Mineralfasern enthalten. Der Anteil des Biomaterials und/oder an Gesteinsmehl und/oder an Mineralfasern im Pulver liegt in der Summe zwischen 20 % und 70 %. Ferner sind im Pulver Farbpigmente, verschleißbeständige Partikel, wie Korund, und/oder Bindemittel, vorzugsweise Harze, insbesondere duroplastische oder aminoplastische Harze in Pulverform, enthalten.

Es wird ein Biomaterial mit einer Partikelgröße von 200 µm bis 1000 µm verwendet. Insbesondere ist die Partikelgröße kleiner oder gleich 500 µm.

Das Pulver kann weiterhin Netzmittel enthalten. Durch die Zugabe von Netzmitteln, insbesondere pulverförmigen Netzmitteln, kann die Befeuchtung bzw. Benetzung der Trägerlage und damit die Haftung des Pulvers auf der Trägerlage verbessert werden. Bei den Netzmitteln handelt es sich um oberflächenaktive Substanzen, die gelöst die Oberflächenspannung der beim Benetzen aufgetragenen Flüssigkeit verringern, so dass die Flüssigkeit leichter in die Trägerlage eindringen kann, wodurch die Haftung des Pulvers verbessert wird.

Das Pulver kann ferner auch Antistatika enthalten. Hierbei handelt es sich um Stoffe, welche als Additiv zugegeben werden und die statische Aufladung der ausgehärteten Oberfläche bzw. der hergestellten Dekorschicht verhindern, zumindest jedoch abschwächen. Die Antistatika verbessern das antistatische Verhalten der Dekorschicht.

Darüber hinaus kann das Pulver auch Antihaftmittel enthalten. Solche Antihaftmittel sind vorteilhaft beim Pressvorgang des Dekorelements zur Erzeugung eines Bauelementes. Insbesondere kann durch die Antihaftmittel eine Anhaftung am Pressblech reduziert werden.

Weiterhin kann das Pulver zusätzlich auch noch Additive enthalten, welche das Fließverhalten und/oder die Aushärtung von Harzen verbessern. Hierbei handelt es sich um solche Harze, die entweder im Pulver selbst enthalten sind, oder um Harze, die in der Trägerlage enthalten sind.

Wie bereits erwähnt kommt als Trägerlage insbesondere ein harzimprägniertes Papier zum Einsatz. Ein Aspekt der Erfindung sieht vor, dass die Trägerlage wärmehärtbares Harz, insbesondere aminoplastische Harze, enthält. Insbesondere ist die Trägerlage mit Harz getränkt oder imprägniert.

Auch kann die Trägerlage Fasermaterialien, beispielsweise Glasfasern oder ähnliche Mittel zur Stabilitätserhöhung, insbesondere der Dimensionsstabilität, enthalten.

Die Weiterverwendung des erfindungsgemäßen Dekorelements, insbesondere bei der Herstellung von Bauelementen, kann dadurch verbessert werden, dass in das Dekorelement zumindest eine Passermarke eingearbeitet wird. Solche Passermarken werden auch als optische Referenzpunkte bezeichnet. Insbesondere werden die Passermarken aufgedruckt und insbesondere beim Druck mit der Tinte aufgebracht.

Das Verpressen von Trägerlage und der mit einem Dekor bedruckten fixierten Pulverlage sowie gegebenenfalls der Decklage erfolgt unter Druck und Wärmeeinwirkung in einer Presse, vorzugsweise einer Kurztaktpresse oder einer kontinuierlichen Presse (CPL- (Continuous Pressed Laminates) Presse).

Der Pressvorgang bei dem die Lagen miteinander verpresst und verbunden werden, wird mit folgenden Prozessparametern durchgeführt:
- der Pressdruck ist größer oder gleich (≥) 1.000 Kilopascal (kPa), vorzugsweise größer oder gleich (≥) 3.500 Kilopascal (kPa),
- die Presstemperatur ist größer oder gleich (≥) 100 °C, insbesondere größer oder gleich (≥) 120 °C, und liegt vorzugsweise im Temperaturbereich zwischen 180°C und 210 °C,
- die Presszeit beträgt kleiner oder gleich (≤) 120 Sekunden und liegt insbesondere zwischen 10 und 60 Sekunden.

Beim Verpressen vernetzen bzw. verbinden sich die Bestandteile der einzelnen Lagen miteinander. In der Pulverlage enthaltendes Harz und Bindemittel infiltriert die Trägerlage. Die Bestandteile binden zum homogenen flächigen Dekorelement ab. Beim Verpressen wird die Schichtstärke der Pulverlage um 50 bis 80% reduziert. Die vorgehärtete fixierte Puderlage weist vor dem Verpressen eine Schichtstärke von 1,0 mm bis 2,0 mm auf. Nach dem Verpessen beträgt die gesamte Dicke des flächigen Dekorelements dann 0,4 mm bis 1 mm. Bei entsprechend anderem Lagenaufbau oder auch einem beidseitigen Auftrag einer Pulverlage auf die Trägerlage kann die gesamte Dicke des Dekorelements auch 3 mm betragen.

Bei einem erfindungsgemäßen Bauelement handelt es sich insbesondere um ein plattenförmiges Bauelement (Anspruch 14), vorzugsweise um ein Fußbodenpaneel (Anspruch 9). Das Bauelement gemäß Anspruch 9 weist ein Dekorelement, hergestellt nach einem erfindungsgemäßen Verfahren, auf.

Das Bauelement kann durch Auftrennen des großflächigen Dekorelements in einzelne Paneele hergestellt werden. Randseitig wird das Bauelement dann profiliert und mit Verbindungskonturen versehen. Die Verbindungskonturen dienen zum Verbinden von in einem Belag benachbart angeordneten Bauelementen. Verbindungskonturen können insbesondere Nut- und Feder- oder Klickverbindungen sein.

Zur Herstellung eines Bauelements, insbesondere eines plattenförmigen Bauelements, vorzugsweise eines Fußbodenpaneels kann das erfindungsgemäß hergestellte Dekorelement auch mit einer Basislage verbunden werden.

Die Basislage kann unterschiedlich gestaltet sein. Beispielsweise kann es sich um eine beschichtete Faserplatte handeln. Vorteilhaft sind auch Basislagen aus Polyurethan (PU). Möglich sind auch Basislagen in Form von Platten aus WPC oder PVC oder aus hochgefüllten Acrylatplatten.

Das flächige Dekorelement kann auf eine Basislage aufgeklebt werden.

Weiterhin ist es möglich, dass die Basislage in flüssiger oder pastöser Form auf die Unterseite eines Dekorelements aufgetragen und anschließend gehärtet wird.

Weiterhin ist es möglich, dass das Dekorelement und die Basislage zur Herstellung eines Bauelements miteinander verpresst werden. Dies erfolgt unter Druck und Wärmeeinwirkung.

Eine Besonderheit der Erfindung ist es, dass beim Pressvorgang und zwar sowohl bei der Herstellung eines erfindungsgemäßen Dekorelements als solches oder auch beim Pressvorgang zur Verbindung des Dekorelements mit einer Basislage, eine dreidimensionale Verprägung bzw. Profilierung der Oberfläche des Dekorelements erfolgen kann. Hierbei wird eine sichtbare und/oder abdichtfühlbare Struktur mit einer Strukturtiefe zwischen 80 mm und 500 mm erzeugt. Die Strukturierung der Oberfläche des Dekorelements erfolgt abgestimmt auf das vorher aufgedruckte Dekorbild.

Die Erfindung ist nachfolgend anhand eines Ausführungsbeispiels näher beschrieben. Es zeigen:

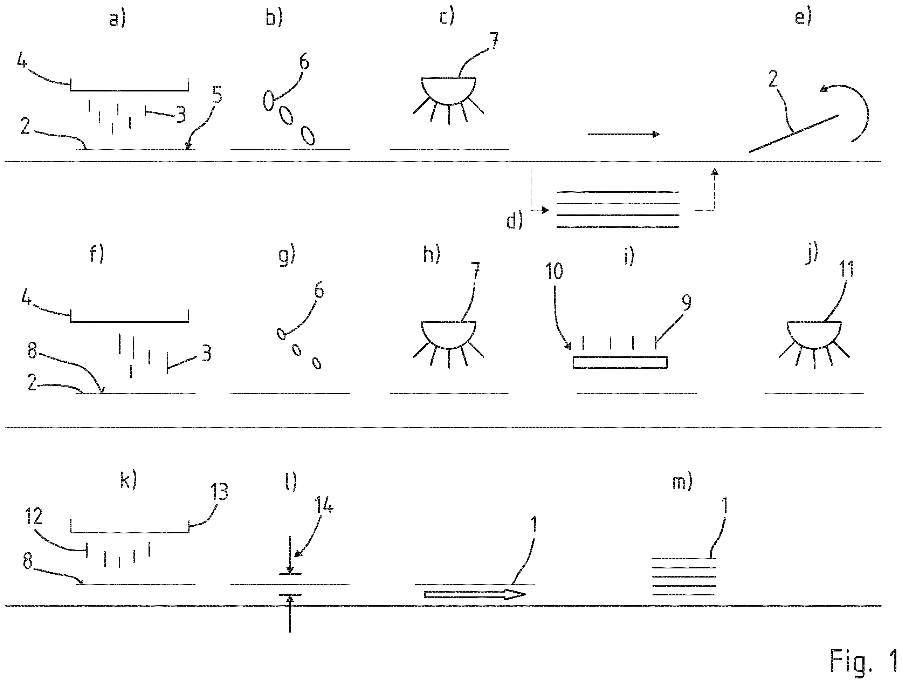

- Figur 1: technisch vereinfacht das Schema eines erfindungsgemäßen Verfahrensablaufs.

In Figur 1 ist der schematische Ablauf des Verfahrens zur Herstellung eines flächigen Dekorelements 1 dargestellt.

Zur Herstellung des Dekorelements 1 wird zunächst eine Trägerlage 2 bereitgestellt. Die Trägerlage 2 besteht aus einem Trägerpapier, insbesondere einer Spezialzellulose oder auch aus einem Vlies. Möglich sind auch Vliese aus Naturfasern oder Vliese aus Chemiefasern. Ein Chemiefaservlies kann aus Mikrofilamenten aufgebaut sein, vorzugsweise auf Basis von Polyethylenterephthalat (PET) und/oder Polyamid (PA).

Übliche Abmessungen einer Trägerlage 2 sind 2,10 m x 5,20 m. Auf die Trägerlage 2 wird ein Pulver 3 aufgebracht (Schnitt a)). Insbesondere erfolgt dies durch ein Aufstreuen des Pulvers 3 mittels einer Streueinrichtung 4. Bei dem hier dargestellten Verfahrensablauf wird zunächst Pulver 3 auf eine erste Seite, nämlich die Rückseite 5 der Trägerlage 2 aufgestreut. Der Auftrag des Pulvers 3 erfolgt in einer Schichtdicke von 1,0 mm bis 2,0 mm. Anschließend wird die Lage aus Pulver 3 (Pulverlage) auf der Trägerlage 2 fixiert. Hierzu wird das Pulver 3 bzw. die Pulverlage zunächst mit einer Flüssigkeit 6, insbesondere Wasser befeuchtet (Schritt b)) und anschließend durch Wärmeeinwirkung mittels einer Wärmequelle 7 getrocknet (Schritt c)). Hierdurch erfolgt ein Angelieren der Pulverlage, bei dem das Pulver 3 der Pulverlage vorhärtet und antrocknet. Beim Fixieren der Pulverlage wird deren Oberfläche so eingestellt, dass die Oberfläche mit einem Dekor bedruckbar ist. Nach dem Fixieren der Pulverlage auf der Trägerlage 2 kann dieses Zwischenprodukt gegebenenfalls abgestalpelt und bevorratet werden. Bei Verwendung von Rollenware kann das Zwischenprodukt auch aufgerollt werden. Dies ist durch den Schritt d) verdeutlicht. Zur Weiterverarbeitung wird die mit der fixierten Pulverlage versehene Trägerlage 2 gewendet (Schritt e)).

Nunmehr erfolgt ein Auftrag von Pulver 3 auf die zweite Seite, die Oberseite 8 der Trägerlage 2 (Schritt f)). Die auf der Oberseite 8 erzeugte Pulverlage wird dann fixiert. Dies erfolgt durch Befeuchten (Schritt g)) und Wärmeeinwirkung (Schritt h)) mit dem zuvor erläuterten Effekt des Angelierens der Pulverlage. Das Befeuchten erfolgt wie zuvor durch einen Auftrag einer Flüssigkeit 6, insbesondere mittels eines Wassernebels. Nach einer Einwirkzeit wird das befeuchtete Pulver mittels einer Wärmequelle 7, insbesondere eines IR-Strahlers oder eines Warmlufterzeugers getrocknet. Auf die fixierte Pulverlage wird dann ein Dekor aufgedruckt. Dies erfolgt digital durch Auftrag von Tinte 9 mittels einer Digitaldruckmaschine 10 (Schritt i)). Der Tintenauftrag kann ein- oder mehrlagig erfolgen. Die aufgebrachte Tinte wird anschließend getrocknet (Schritt j)), vorzugsweise durch eine Wärme- bzw. Strahlungsquelle 11 in Form eines UV-Strahlers.

Auch im Anschluss an diesen Verfahrensschritt können die Zwischenprodukte zwischengelagert werden.

Im weiteren Herstellungsprozess erfolgt dann ein Auftrag einer Decklage auf die mit dem Dekor bedruckte Oberseite 8 der Pulverlage. Die Decklage wird durch Aufstreuen eines Pulvers 12 mittels einer Auftragsvorrichtung 13 erzeugt (Schritt k)). Das Pulver 12 der Decklage besteht im Wesentlichen aus abrieb- und verschleißbeständigen Partikeln, wie insbesondere Korund sowie Harzen und Bindemitteln.

Dieser Mehrlagenkörper aus Trägerlage, fixierter Pulverlage mit aufgedrucktem Dekor und oberseitiger Decklage wird anschließend in einer Presse 14 unter Druck und Wärmeeinwirkung verpresst (Schritt I)). Beim Pressvorgang verbinden sich die Lagen bzw. deren Bestandteile innig miteinander und binden. Das Pressen kann taktweise erfolgen oder in einer kontinuierlichen Presse (KT (Kurztakt) oder CPL-Verfahren).

Man erhält ein großformatiges flächiges Dekorelement 1, welches anschließend in kleinere Dekorelemente 1 bestimmter Größe aufgeteilt (Schritt m)) und der Weiterverwendung zugeführt wird.

Beim Verpressen wird die Schichtstärke der Pulverlage um 50% bis 80% reduziert. Man erhält ein flächiges Dekorelement 1 mit einer Dicke bzw. Stärke von vorzugsweise 0,3 mm bis 3,0 mm. Das Pulver 12 der Decklage verleiht dem Dekorelement eine hochabriebfeste und verschleißbeständige Oberfläche.

Ein Dekorelement 1 kann randseitig profiliert und insbesondere mit Nut und Federn oder auch mit sogenannten Klickverbindungsmitteln versehen werden.

Das Dekorelement 1 kann auch in einem weiteren nicht näher dargestellten Verarbeitungsschritt mit und auf eine Basislage verbunden werden.

### Bezugszeichen:

- 1 -: Dekorelement
- 2-: Trägerlage
- 3 -: Pulver
- 4 -: Streueinrichtung
- 5 -: Rückseite von 2
- 6 -: Flüssigkeit
- 7 -: Wärmequelle
- 8 -: Oberseite von 2
- 9 -: Tinte
- 10-: Digitaldruckmaschine
- 11 -: Strahlungsquelle
- 12 -: Pulver
- 13 -: Auftragsvorrichtung
- 14 -: Presse

## Patentansprüche

1. Verfahren zur Herstellung eines flächigen Dekorelements (1), bei welchem auf eine Trägerlage (2) eine Lage aus Pulver (3) aufgebracht wird, wobei eine Trägerlage (2) auf Papierbasis oder Vliesbasis verwendet wird, welche harzimprägniert ist und die Pulverlage mit einem Flächengewicht von 30 g/m2 bis 650 g/m2 aufgetragen wird, wozu auf die Trägerlage (2) mehrere Pulver, insbesondere farblich und/oder stofflich und/oder in der Partikelgröße voneinander verschiedene Pulver, aufgetragen werden und das Pulver (3) auf der Trägerlage (2) fixiert wird, wobei das Fixieren des Pulvers (3) auf der Trägerlage (2) durch einen Flüssigkeitsauftrag und anschließende Trocknung erfolgt, wobei die Trocknung insbesondere durch Wärmeeinwirkung, vorzugsweise mittels IR-Strahlung, durchgeführt wird und anschließend ein Dekor auf der Pulverlage erzeugt wird und auf die getrocknete Pulverlage vor dem Verpressen eine Decklage aufgebracht wird und die Trägerlage (2), die Pulverlage, das Dekor und die Decklage zum Dekorelement (1) verpresst werden, **dadurch gekennzeichnet, dass** eine Trägerlage (2) mit einem Gewicht zwischen einschließlich 10 g/m2 und einschließlich 350 g/m2 verwendet wird sowie ein Pulver (3) verwendet wird, welches Biomaterialpartikel, insbesondere Holzpartikel und/oder Gesteinsmehl und/oder Mineralfasern, in einem Anteil zwischen 20 % und 70 % sowie Farbpigmente, Korund und Bindemittel, insbesondere duroplastische Harze in Pulverform enthält, wobei ein Biomaterial mit einer Partikelgröße von 200 µm bis 1000 µm verwendet wird und das Dekor durch einen ein- oder mehrmaligen Auftrag von Tinte (9) erzeugt wird und die Tinte (9) getrocknet wird und wobei die Decklage in Pulverform auf die mit dem Dekor bedruckte Oberseite der Pulverlage aufgebracht wird, wobei das Pulver der Decklage im Wesentlichen aus abrieb- und verschleißbeständigen Partikeln, wie Korund sowie Harzen und Bindemitteln besteht und wobei die Schichtstärke der Pulverlage beim Pressvorgang um 50% bis 80% reduziert wird.

2. Verfahren nach Anspruch 1, **dadurch gekennzeichnet, dass** die Trägerlage (2) beidseitig mit einer Pulverlage versehen wird.

3. Verfahren nach Anspruch 1 oder 2, **dadurch gekennzeichnet, dass** zunächst auf der ersten Seite (5) (Rückseite) der Trägerlage (2) die Pulverlage hergestellt wird und danach auf der zweiten Seite (8) (Oberseite) eine Pulverlage hergestellt wird.

4. Verfahren nach wenigstens einem der Ansprüche 1 bis 3, **dadurch gekennzeichnet, dass** auf die Trägerlage (2) mehrmals Pulver (3) aufgetragen wird.

5. Verfahren nach einem der Ansprüche 1 bis 4, **dadurch gekennzeichnet, dass** das Pulver (3) Netzmittel und/oder Antistatika und/oder Antihaftmittel enthält.

6. Verfahren nach einem der Ansprüche 1 bis 5, **dadurch gekennzeichnet, dass** das Pulver (3) Additive enthält, welche das Fließverhalten und/oder die Aushärtung von Harzen verbessern.

7. Verfahren nach einem der Ansprüche 1 bis 6, **dadurch gekennzeichnet, dass** in das Dekorelement (1) zumindest eine Passermarke eingearbeitet wird.

8. Verfahren nach einem der Ansprüche 1 bis 7, **dadurch gekennzeichnet, dass** das Dekorelement (1) beim Verpressen eine Oberfläche mit einer dreidimensionalen Prägung erhält, insbesondere wird eine Maserung und/oder Profilierung der Oberfläche synchron zur Pulverlage erzeugt.

9. Bauelement, insbesondere plattenförmiges Bauelement, vorzugsweise Fußbodenpaneel, mit einem Dekorelement (1) hergestellt durch ein Verfahren gemäß einem der Ansprüche 1 bis 8.

10. Verfahren zur Herstellung eines Bauelements, insbesondere eines plattenförmigen Bauelements, vorzugsweise eines Fußbodenpaneels, mit einem Dekorelement, hergestellt durch ein Verfahren gemäß einem der Ansprüche 1 bis 8, **dadurch gekennzeichnet, dass** das Dekorelement (1) mit einer Basislage verbunden wird.

11. Verfahren nach Anspruch 10, **dadurch gekennzeichnet, dass** das Dekorelement (1) auf die Basislage geklebt wird.

12. Verfahren nach Anspruch 10, **dadurch gekennzeichnet, dass** die Basislage in flüssiger oder pastöser Form auf die Unterseite des Dekorelements (1) aufgetragen und anschließend gehärtet wird.

13. Verfahren nach Anspruch 10, **dadurch gekennzeichnet, dass** das Dekorelement (1) und die Basislage miteinander verpresst werden.

14. Plattenförmiges Bauelement, welches eine Trägerlage und eine auf die Trägerlage (2) aufgebrachte Lage aus Pulver (3) aufweist, **dadurch gekennzeichnet, dass** die Pulverlage Biomaterialpartikel enthält, insbesondere Holzpartikel und/oder Gesteinsmehl und/oder Mineralfasern in einem Anteil zwischen 20% und 70% sowie Farbpigmente, verschleißbeständige Partikel und Bindemittel enthält, wobei das Biomaterial eine Partikelgröße von 200 µm bis 1000 µm besitzt und die Pulverlage mit einem Dekor bedruckt ist sowie auf das Dekor eine Decklage aufgebracht ist, wobei die Trägerlage (2), die Pulverlage, das Dekor und die Decklage miteinander unter Druck und Wärmeeinwirkung verpresst sind.

15. Plattenförmiges Bauelement nach Anspruch 14, **dadurch gekennzeichnet, dass** die Oberfläche eine dreidimensional geprägte Struktur aufweist.

## Claims

1. Method for manufacturing a flat decorative element (1), in which a layer of powder (3) is applied onto a substrate layer (2), wherein a paper-based or nonwoven-based substrate layer (2) is used, which is resin-impregnated and the powder layer is applied with a weight per unit area of 30 g/m2 to 650 g/m2, to which end multiple powders, in particular powders that differ from one another in respect of colour and/or substance and/or particle size, are applied onto the substrate layer (2) and the powder (3) is fixed on the substrate layer (2), wherein the fixing of the powder (3) on the substrate layer (2) comes about through an application of liquid and subsequent drying, wherein the drying is performed in particular through the action of heat, preferably by means of IR radiation, and thereafter a decorative pattern is created on the powder layer and a facing layer is applied onto the dried powder layer before pressing and the substrate layer (2), the powder layer, the decorative pattern and the facing layer are pressed to form the decorative element (1), **characterised in that** a substrate layer (2) having a weight between 10 g/m2 and 350 g/m2, inclusive of both values, is used and also a powder (3) is used that contains biomaterial particles, in particular wood particles and/or powdered rock and/or mineral fibres, in an amount between 20 % and 70 % and also colour pigments, corundum and binder, in particular thermoset resins in powder form, wherein a biomaterial having a particle size from 200 µm to 1000 µm is used and the decorative pattern is created through one or more applications of ink (9) and the ink (9) is dried and wherein the facing layer is applied in powder form onto the top side of the powder layer printed with the decorative pattern, wherein the powder of the facing layer consists essentially of abrasion- and wear-resistant particles such as corundum and also resins and binders and wherein the coating thickness of the powder layer is reduced by 50 % to 80 % during the pressing procedure.

2. Method according to claim 1, **characterised in that** the substrate layer (2) is provided with a powder layer on both sides.

3. Method according to claim 1 or 2, **characterised in that** first the powder layer is produced on the first side (5) (rear side) of the substrate layer (2) and thereafter a powder layer is produced on the second side (8) (top side).

4. Method according to at least one of claims 1 to 3, **characterised in that** powder (3) is applied multiple times onto the substrate layer (2).

5. Method according to any one of claims 1 to 4, **characterised in that** the powder (3) contains wetting agents and/or antistatic agents and/or non-stick agents.

6. Method according to any one of claims 1 to 5, **characterised in that** the powder (3) contains additives that improve the flow behaviour and/or the curing of resins.

7. Method according to any one of claims 1 to 6, **characterised in that** at least one fiducial mark is incorporated into the decorative element (1).

8. Method according to any one of claims 1 to 7, **characterised in that**, during pressing, the decorative element (1) acquires a surface with a three-dimensional stamping, in particular a graining and/or profiling of the surface is created synchronously with the powder layer.

9. Construction element, in particular sheet-type construction element, preferably floor panel, with a decorative element (1) manufactured by way of a method according to any one of claims 1 to 8.

10. Method for manufacturing a construction element, in particular a sheet-type construction element, preferably a floor panel, with a decorative element, manufactured by way of a method according to any one of claims 1 to 8, **characterised in that** the decorative element (1) is connected to a base layer.

11. Method according to claim 10, **characterised in that** the decorative element (1) is bonded onto the base layer.

12. Method according to claim 10, **characterised in that** the base layer is applied in liquid or paste form onto the underside of the decorative element (1) and thereafter is cured.

13. Method according to claim 10, **characterised in that** the decorative element (1) and the base layer are pressed together.

14. Sheet-type construction element, having a substrate layer and a layer of powder (3) applied onto the substrate layer (2), **characterised in that** the powder layer contains biomaterial particles, in particular wood particles and/or powdered rock and/or mineral fibres in an amount between 20 % and 70 % and also colour pigments, wear-resistant particles and binder, wherein the biomaterial has a particle size from 200 µm to 1000 µm and the powder layer is printed with a decorative pattern and also a facing layer is applied onto the decorative pattern, wherein the substrate layer (2), the powder layer, the decorative pattern and the facing layer are pressed together under pressure and action of heat.

15. Sheet-type construction element according to claim 14, **characterised in that** the surface has a three-dimensionally stamped texture.

## Revendications

1. Procédé pour produire un élément décoratif (1) plan, selon lequel une couche de poudre (3) est appliquée sur une couche de support (2), dans lequel une couche de support (2) à base de papier ou à base de non-tissé est utilisée, laquelle est imprégnée de résine et la couche de poudre est appliquée avec une masse surfacique de 30 g/m² à 650 g/m², à cet effet plusieurs poudres, en particulier des poudres différentes les unes des autres en couleur et/ou en matière et/ou en taille de particule, sont appliquées sur la couche de support (2) et la poudre (3) est fixée sur la couche de support (2), dans lequel la fixation de la poudre (3) sur la couche de support (2) s'effectue par une application de liquide et séchage consécutif, dans lequel le séchage est réalisé en particulier par action de chaleur, de préférence au moyen d'un rayonnement infrarouge et ensuite un décor est produit sur la couche de poudre et une couche de recouvrement est appliquée sur la couche de poudre séchée avant la compression et la couche de support (2), la couche de poudre, le décor et la couche de recouvrement sont compressés en l'élément décoratif (1), **caractérisé en ce qu'**une couche de support (2) est utilisée avec un poids compris entre 10 g/m² inclus et 350 g/m² inclus et une poudre (3) est utilisée, laquelle contient des particules de biomatériau, en particulier des particules de bois et/ou de la poudre de roche et/ou des fibres minérales, dans un pourcentage compris entre 20 % et 70 %, ainsi que des pigments colorants, du corindon et des liants, en particulier une résine thermodurcissable sous forme de poudre, dans lequel un biomatériau avec une taille de particules de 200 µm à 1000 µm est utilisé et le décor est produit par une application unique ou répétée d'encre (9) et l'encre (9) est séchée et dans lequel la couche de recouvrement est appliquée sous forme de poudre sur la face supérieure, imprimée avec le décor, de la couche de poudre, dans lequel la poudre de la couche de recouvrement est constituée sensiblement de particules résistantes à l'abrasion et à l'usure, telles que le corindon ainsi que de résines et de liants et dans lequel l'épaisseur de couche de la couche de poudre est réduite de 50 % à 80 % lors du processus de presse.

2. Procédé selon la revendication 1, **caractérisé en ce que** la couche de support (2) est pourvue des deux côtés d'une couche de poudre.

3. Procédé selon la revendication 1 ou 2, **caractérisé en ce que** la couche de poudre est tout d'abord produite sur la première face (5) (face arrière) de la couche de support (2) et ensuite une couche de poudre est produite sur la seconde face (8) (face supérieure).

4. Procédé selon au moins l'une des revendications 1 à 3, **caractérisé en ce que** de la poudre (3) est appliquée plusieurs fois sur la couche de support (2).

5. Procédé selon l'une quelconques des revendications 1 à 4, **caractérisé en ce que** la poudre (3) contient des agents mouillants et/ou agents antistatiques et/ou agents antiadhésifs.

6. Procédé selon l'une quelconque des revendications là 5, **caractérisé en ce que** la poudre (3) contient des additifs, lesquels améliorent l'aptitude à l'écoulement et/ou le durcissement de résines.

7. Procédé selon l'une quelconque des revendications 1 à 6, **caractérisé en ce qu'**au moins une marque de repérage est pratiquée dans l'élément décoratif (1).

8. Procédé selon l'une quelconque des revendications 1 à 7, **caractérisé en ce que** l'élément décoratif (1) obtient lors de la compression une surface avec un estampage tridimensionnel, en particulier une texture et/ou un profilage de la surface de manière synchrone avec la couche de poudre.

9. Pièce, en particulier pièce en forme de plaque, de préférence panneau de plancher, avec un élément décoratif (1) produit par un procédé selon l'une quelconque des revendications 1 à 8.

10. Procédé pour produire une pièce, en particulier une pièce en forme de plaque, de préférence un panneau de plancher, avec un élément décoratif, produit par un procédé selon l'une quelconque des revendications 1 à 8, **caractérisé en ce que** l'élément décoratif (1) est relié à une couche de base.

11. Procédé selon la revendication 10, **caractérisé en ce que** l'élément décoratif (1) est collé sur la couche de base.

12. Procédé selon la revendication 10, **caractérisé en ce que** la couche de base est appliquée sous forme liquide ou pâteuse sur la face inférieure de l'élément décoratif (1) et ensuite durcie.

13. Procédé selon la revendication 10, **caractérisé en ce que** l'élément décoratif (1) et la couche de base sont compressés ensemble.

14. Pièce en forme de plaque, laquelle présente une couche de support et une couche de poudre (3) appliquée sur la couche de support (2), **caractérisée en ce que** la couche de poudre contient des particules de biomatériau, en particulier des particules de bois et/ou de la poudre de roche et/ou des fibres minérales dans un pourcentage compris entre 20 % et 70 % ainsi que des pigments colorants, des particules résistantes à l'usure et des liants, dans laquelle le biomatériau possède une taille de particules de 200 µm à 1000 µm et la couche de poudre est imprimée avec un décor et une couche de recouvrement est appliquée sur le décor, dans laquelle la couche de support (2), la couche de poudre, le décor et la couche de recouvrement sont compressés ensemble sous pression et l'action de chaleur.

15. Pièce en forme de plaque selon la revendication 14, **caractérisée en ce que** la surface présente une structure estampée de manière tridimensionnelle.
